# FASCICULE DE BREVET EUROPEEN

(11) **EP 3 900 281 B1**
(45) Date de publication et mention de la délivrance du brevet: **13.09.2023**
(21) Numéro de dépôt: 19821106.2
(22) Date de dépôt: 19.12.2019
(51) Int. Cl.: H04L 45/02

(54) **ÉQUIPEMENT RÉSEAU AVEC FONCTION DE ROUTAGE BASÉ SUR UNE POLITIQUE INTER-RÉSEAU**
NETZAUSRÜSTUNG MIT ROUTING-FUNKTIONEN AUF DER BASIS VON INTER-NETWORK-POLITIK
NETWORK EQUIPMENT WITH ROUTING FUNCTION BASED ON INTER-NETWORK POLICY

(30) Priorité: 20.12.2018 FR 1873485
(43) Date de publication de la demande: 27.10.2021
(73) Titulaire: Airbus Defence and Space SAS, 31402 Toulouse Cedex 4 (FR)
(72) Inventeur: POLETTI, Claude, 92260 Fontenay Aux Roses (FR)
(74) Mandataire: Cabinet Le Guen Maillet
(86) Numéro de dépôt international: PCT/EP2019/086184
(87) Numéro de publication internationale: WO 2020/127648

(56) Documents cités:
- EP-A1- 1 583 287
- WO-A1-2011/012569
- HASSAN SUHAIDI ET AL: "Border Gateway Protocol based Path Vector mechanism for inter-domain routing in Software Defined Network environment", 2016 IEEE CONFERENCE ON OPEN SYSTEMS (ICOS), IEEE, 10 octobre 2016 (2016-10-10), pages 76-80, XP033078322, DOI: 10.1109/ICOS.2016.7881992

## Description

### DOMAINE TECHNIQUE

La présente invention concerne le routage par des éléments réseau, tels que des routeurs, dans un réseau de communication interconnectant de tels éléments réseau par des liens de communication inter-réseaux.

### ETAT DE LA TECHNIQUE ANTERIEURE

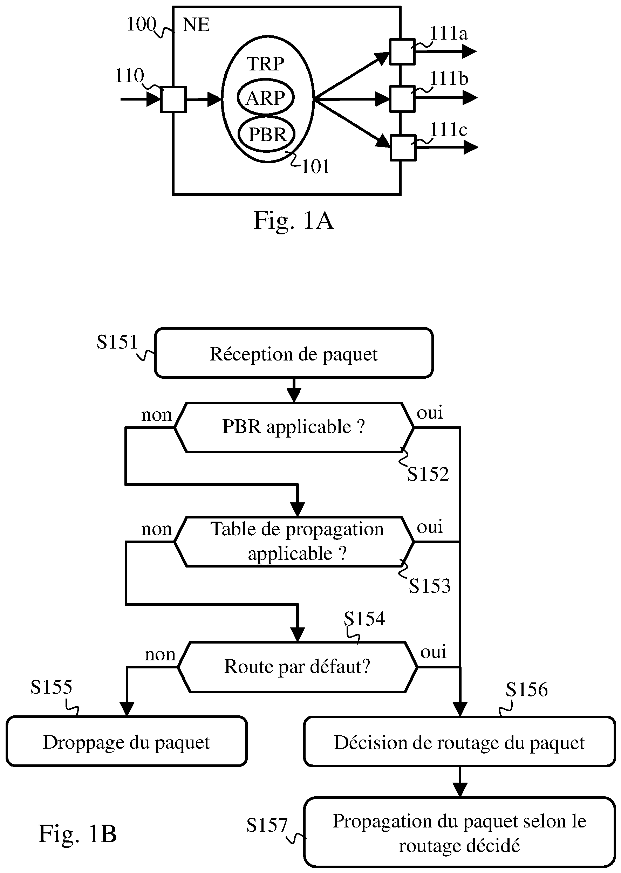

Dans les réseaux de communication par commutation de paquets, des éléments réseau NE (« Network Elements » en anglais), aussi appelés « *nœuds réseau* », tels que des routeurs, décident automatiquement des chemins à suivre par les paquets. La **Fig. 1A** illustre schématiquement un agencement d'un tel élément réseau NE 100 selon l'état de la technique. L'élément réseau NE 100 comporte un ensemble d'interfaces 110, 11 1a, 111b, 111c, qu'elles soient physiques ou virtuelles. Lorsqu'un paquet de données est reçu via une interface d'entrée parmi ces interfaces, par exemple l'interface 110, l'élément réseau NE 100 doit décider vers quelle interface de sortie, par exemple une interface parmi les interfaces 111a, 111b, 111c, router le paquet de données reçu. L'interface 110 est ici une interface d'entrée et les autres interfaces 111a, 111b, 111c sont des interfaces de sortie. L'interface 110 est typiquement couplée avec une dite autre interface 111a, 111b, 111c afin de former une interface d'entrée-sortie.

L'élément réseau NE 100 implémente un mécanisme de décision de routage, aussi appelé processus de routage traditionnel TRP (« Traditional Routing Process » en anglais) 101. Ce processus de routage traditionnel TRP 101 décide, en fonction plus particulièrement de l'adresse de destination du paquet de données reçu d'après un apprentissage de routes dans le réseau de communication, vers quelle interface de sortie router ledit paquet de données afin que ledit paquet de données puisse atteindre le destinataire visé. Un exemple se trouve dans WO 2011/012569.

Pour ce faire, le processus de routage traditionnel TRP 101 applique des règles dynamiques, c'est-à-dire dynamiquement apprises, définies par le plan de contrôle (« Control Plane » en anglais), de manière distribuée entre des éléments réseau NE du réseau de communication et/ou de manière centralisée. Ces règles dynamiques sont retranscrites dans des tables de routage (« routing tables » en anglais) et dans des tables de propagation (« forwarding tables » en anglais). A noter que la dynamicité des règles dynamiques évoquées ici est relativement faible. En effet, ces règles dynamiques sont apprises suite à un changement d'état de lien(s) du réseau de communication et ne changent pas jusqu'à ce que survienne un nouveau changement d'état de lien(s) du réseau de communication. Outre les règles dynamiques, des règles statiques peuvent être ajoutées par configuration dans les tables de routage et dans les tables de propagation. Les tables de routage servent à définir la connaissance de possibilités de routage, c'est-à-dire la connaissance des routes, qui est acquise par le processus de routage traditionnel TRP 101 grâce au plan de contrôle. Les tables de propagation servent à retenir les routes les plus adaptées parmi celles stockées dans les tables de routage.

Le processus de routage traditionnel TRP 101 comporte ainsi un processus de routage automatique ARP (« Automatic Routing Process » en anglais) constitué de ces règles dynamiques et éventuellement de ces règles statiques, les décisions de routage étant prises en appliquant les règles statiques avant les règles dynamiques. Le processus de routage automatique ARP prend des décisions de routage selon des critères, codés « en dur » (« hard-coded » en anglais) et portés par le protocole d'apprentissage des routes du réseau de communication. Les règles de routage peuvent évoluer au fil de l'évolution des états de lien(s) du réseau de communication, mais les critères de décision de routage restent les mêmes.

Dans le processus de routage traditionnel TRP 101, le processus de routage automatique ARP peut être complété par des politiques de routage sur les interfaces d'entrées de l'élément réseau NE considéré. On parle de routage basé sur une politique PBR (« Policy-Based Routing » en anglais). Ainsi, lorsqu'un paquet de données est reçu via une de ses interfaces d'entrée, l'élément réseau NE 100 recherche d'abord si le paquet reçu correspond (« matching » en anglais) à une règle de routage PBR. Si tel est le cas, l'élément réseau NE 100 suit les indications de routage définies dans la règle de routage PBR pour décider vers quelle interface de sortie router le paquet de données. Sinon, l'élément réseau NE 100 cherche à appliquer le processus de routage automatique ARP et recherche si le paquet reçu correspond à une règle de routage définie dans sa table de propagation. Si tel est le cas, l'élément réseau NE 100 suit les indications de routage définies dans la table de propagation pour décider vers quelle interface de sortie router le paquet de données. Cet aspect est schématiquement illustré sur la **Fig. 1B****.** Plus en détails, dans une étape S151, l'élément réseau NE 100 reçoit un paquet de données via une interface d'entrée dudit élément réseau NE 100. Dans une étape S 152, l'élément réseau NE 100 vérifie si le paquet reçu correspond à une règle de routage PBR. Si tel est le cas, une étape S156 est effectuée, dans laquelle l'élément réseau NE 100 prend une décision de routage conforme à la règle de routage PBR à laquelle correspond ledit paquet de données reçu, et une étape S157 est ensuite effectuée ; sinon, une étape S153 est effectuée. Dans l'étape S153, l'élément réseau NE 100 se tourne vers le processus de routage automatique ARP, et vérifie si le paquet reçu correspond à une règle de routage dans la table de propagation. Si tel est le cas, l'étape S156 est effectuée, dans laquelle l'élément réseau NE 100 prend une décision de routage conforme à la règle de routage trouvée dans la table de propagation et à laquelle correspond ledit paquet de données reçu, et l'étape S157 est ensuite effectuée ; sinon, une étape S154 est effectuée. Dans l'étape S154, l'élément réseau NE 100 vérifie si le paquet reçu correspond à une route par défaut. Si tel est le cas, l'étape S156 est effectuée, dans laquelle l'élément réseau NE 100 prend une décision de routage conforme à la route par défaut, et l'étape S157 est ensuite effectuée ; sinon, une étape S155 est effectuée. Dans l'étape S155, l'élément réseau NE 100 considère être incapable de prendre une décision de routage concernant le paquet de données reçu et effectue alors un droppage du paquet de données ; au contraire, dans l'étape S157, l'élément réseau NE 100 a été capable de prendre une décision de routage concernant le paquet de données reçu et applique la décision de routage prise dans l'étape S156, et transmet alors le paquet de données via son interface de sortie correspondante.

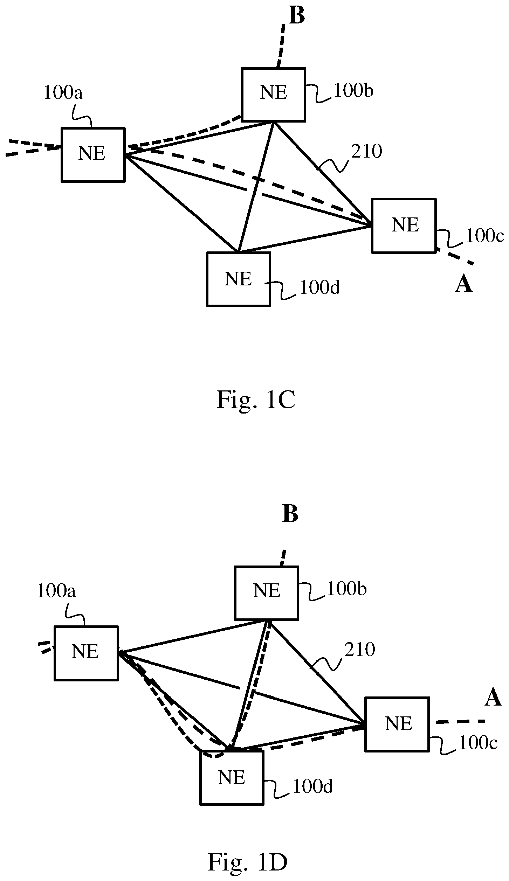

Il ressort de ce qui précède que les règles de routage PBR sont appliquées en entrée des éléments réseau NE, en alternative du processus de routage automatique ARP. En d'autres termes, soit les règles de routage PBR sont appliquées, soit les règles de routage du processus de routage automatique sont appliquées, l'application des règles de routage PBR préemptant l'application des règles de routage du processus de routage automatique ARP. Cette approche de l'état de la technique pose toutefois certaines difficultés. En effet, l'approche en alternative des règles de routage PBR par rapport au processus de routage automatique ARP implique des effets de bord de déroutage non désiré de certains paquets de données, et donc de délestage non intentionnel de liens de communication, du fait que la prise effective de décision de routage est réalisée en entrée de l'élément réseau NE 100. Cette situation est illustrée par les **Figs. 1C** et **1D****.**

Sur la Fig. 1C sont représenté deux flux de paquets de données A et B transitant dans un réseau de communication composé d'au moins trois éléments réseau NE 100a, 100b, 100c, 100d interconnectés par des liens de communication inter-réseaux 210. L'interconnexion des éléments réseau NE 100a, 100b, 100c, 100d par les liens de communication inter-réseaux 210 crée des redondances de chemins pour communiquer entre paires d'éléments réseau NE. Les flux de données de paquets de données A et B concernent des applications similaires et sont donc de même type. Le flux de paquets de données A est routé entre l'élément réseau NE 100a et l'élément réseau NE 100c, et le flux de paquets de données B est routé entre l'élément réseau NE 100a et l'élément réseau NE 100b. Le routage montré sur la Fig. 1C résulte de décisions de routage prises par le processus de routage automatique ARP, typiquement ici en se basant sur un protocole de routage cherchant le chemin le plus court.

En introduisant dans l'élément réseau NE 100a une règle de routage PBR qui vise à délester le lien de communication inter-réseau 210 entre l'élément réseau NE 100a et l'élément réseau NE 100c vis-à-vis du flux de paquets de données A, on obtient le routage représenté sur la Fig. 1D. Etant donné que la règle de routage PBR n'a typiquement pas connaissance des routes possibles dans le réseau de communication, la règle de routage déleste aussi le lien de communication inter-réseau 210 entre l'élément réseau NE 100a et l'élément réseau NE 100b en déroutant aussi le flux de paquets de données B puisque ces flux de données sont de même nature. On se retrouve alors à surcharger le lien de communication inter-réseau 210 entre l'élément réseau NE 100a et l'élément réseau NE 100d, ainsi que celui entre l'élément réseau NE 100d et l'élément réseau NE 100b. Cette situation peut être particulièrement dommageable si l'un et/ou l'autre de ces liens de communication inter-réseau 210 est en congestion notamment dans le cas d'une liaison sans-fil, ce qui implique de grandes variations de capacité de transmission et donc un impact sur la Qualité d'Expérience QoE (« Quality of Expérience » en anglais). Ainsi, pour que les règles de routage PBR soient efficaces et pertinentes, il devient nécessaire de dupliquer, au sein des règles de routage PBR, les critères de décision de routage du processus de routage automatique ARP, et que le plan de contrôle des règles de routage PBR intègre par conséquent des mécanismes d'apprentissage de routes. Chercher à contrer les déroutages non désirés de paquets de données, ou à gagner flexibilité de déroutage de certains flux de paquets de données par rapport à d'autres flux de paquets de données notamment en remettant en cause les critères de décision de routage, complexifie significativement la gestion des règles de routage PBR, qui doivent alors être adaptées dynamiquement aux évolutions topologiques du réseau de communication qui sont normalement gérées par le processus de routage automatique ARP. A ceci s'ajoute le fait que les règles de routage PBR et le processus de routage automatique ARP reposent sur des plans de contrôle distincts, et qu'il est typiquement nécessaire de faire interagir ces plans de contrôle pour permettre d'inclure l'apprentissage de routes dans les règles de routage PBR, ou d'ajouter des champs dans les paquets de données de sorte à permettre aux règles de routage PBR d'acquérir la connaissance des routes du réseau de communication.

Il est souhaitable de pallier ces différents inconvénients de l'état de la technique. Il est ainsi souhaitable de fournir une solution qui permette une plus grande flexibilité de configuration des éléments réseau pour la prise de décision de routage.

### EXPOSE DE L'INVENTION

Un objet de la présente invention est de proposer un procédé pour router un paquet de données par un premier élément réseau d'un réseau de communication comportant en outre plusieurs seconds éléments réseau, les premier et seconds éléments réseau étant interconnectés par des liens de communication inter-réseaux, le procédé de routage comportant un processus de routage traditionnel incluant une prise de décision de routage en fonction de la destination du paquet de données d'après un apprentissage de routes dans le réseau de communication. Le procédé de routage comporte en outre une révision de la décision de routage prise par le processus de routage traditionnel par le biais d'une fonction de routage basé sur une politique inter-réseau InPBR sélectionnée parmi une pluralité de fonctions de routage basé sur une politique inter-réseau InPBR candidates dudit premier élément réseau, chaque fonction de routage basé sur une politique inter-réseau InPBR candidate étant affectée à une interface de sortie dudit premier élément réseau et vice versa, la fonction de routage basé sur une politique inter-réseau InPBR sélectionnée étant la fonction de routage basé sur une politique inter-réseau InPBR candidate affectée à l'interface de sortie sélectionnée par le processus de routage traditionnel pour router ledit paquet de données dans le réseau de communication.

Ainsi, étant donné qu'il existe une fonction de routage basé sur une politique inter-réseau InPBR pour chaque interface de sortie et que la fonction de routage basé sur une politique inter-réseau InPBR sélectionnée est celle qui correspond à l'interface de sortie qui correspond à la décision de routage du processus de routage traditionnel, la fonction de routage basé sur une politique inter-réseau InPBR connaît de manière inhérente quelle est la décision de routage issue du processus de routage traditionnel. L'apprentissage des routes dans les règles de routage n'est alors pas nécessaire, contrairement à la situation où le routage basé sur une politique PBR de l'état de la technique est mis en oeuvre à la place des fonctions de routage basé sur une politique inter-réseau InPBR de la présente invention. Contrairement aux règles de routage PBR de l'état de la technique, le plan de contrôle des fonctions de routage basé sur une politique inter-réseau InPBR de la présente invention n'a pas besoin d'interagir avec le plan de contrôle du processus de routage automatique ARP du processus de routage traditionnel pour éviter les déroutages non désirés de paquets de données. De plus, comme il n'est pas utile que les fonctions de routage basé sur une politique inter-réseau InPBR fasse un apprentissage des routes du réseau de communication, il est inutile d'ajouter des champs dans les paquets de données pour ce faire.

Selon un mode de réalisation particulier, ledit premier élément réseau comportant un point de contrôle de service affecté à chaque interface de sortie dudit premier élément réseau et vice versa, le paquet de données est traité par le point de contrôle de service affecté à l'interface de sortie sélectionnée par la fonction de routage basé sur une politique inter-réseau InPBR sélectionnée, et chaque point de contrôle de service inclut un mécanisme d'application d'admission et un point d'application de politique.

Ainsi, la gestion de qualité de service QoS (« Quality of Service » en anglais) est améliorée, et le niveau de congestion de trafic sur chaque lien de communication inter-réseau est aisément pris en compte et contrôlé.

Selon un mode de réalisation particulier, ledit premier élément réseau comportant une fonction de traitement en sortie affectée à chaque interface de sortie dudit premier élément réseau, le paquet de données est traité par la fonction de traitement en sortie affectée à l'interface de sortie sélectionnée par la fonction de routage basé sur une politique inter-réseau InPBR sélectionnée.

Ainsi, des traitements peuvent être aisément appliqués sur les paquets de données à router et/ou des statistiques peuvent être aisément obtenues à partir des paquets de données à router, d'après la décision de routage revue par la fonction de routage basé sur une politique inter-réseau InPBR effectivement sélectionnée.

Selon un mode de réalisation particulier, ledit premier élément réseau comportant pour chaque interface de sortie autant de fonctions de traitement en que de fonctions de routage basé sur une politique inter-réseau InPBR, le paquet de données est traité par une fonction de traitement en sortie sélectionnée parmi les fonctions de traitement en sortie affectées à l'interface de sortie sélectionnée par la fonction de routage basé sur une politique inter-réseau InPBR sélectionnée, la fonction de traitement en sortie sélectionnée étant la fonction de traitement en sortie associée à la fonction de routage basé sur une politique inter-réseau InPBR sélectionnée.

Ainsi, des traitements peuvent être aisément appliqués sur les paquets de données à router et/ou des statistiques peuvent être aisément obtenues à partir des paquets de données à router, en fonction de la fonction de routage basé sur une politique inter-réseau InPBR effectivement sélectionnée ainsi qu'en fonction de la décision de routage revue par cette fonction de routage basé sur une politique inter-réseau InPBR effectivement sélectionnée.

Selon un mode de réalisation particulier, ledit premier élément réseau comportant une boucle de retour depuis les fonctions de traitement en sortie vers les fonctions de routage basé sur une politique inter-réseau InPBR, les fonctions de traitement en sortie fournissent aux fonctions de routage basé sur une politique inter-réseau InPBR des informations quant à des traitements appliqués par les fonctions de traitement en sortie sur ledit paquet de données.

Ainsi, les fonctions de routage basé sur une politique inter-réseau InPBR disposent d'informations, aisément enrichies, vis-à-vis des liens de communication inter-réseau effectivement sélectionnés pour router les paquets de données.

Selon un mode de réalisation particulier, la fonction de traitement en sortie affectée à l'interface de sortie sélectionnée par la fonction de routage basé sur une politique inter-réseau InPBR sélectionnée demande à ladite fonction de routage basé sur une politique inter-réseau InPBR sélectionnée de revoir sa décision de routage du paquet de données sur la base d'informations simultanément fournies par ladite fonction de traitement en sortie via la boucle de retour.

Ainsi, une décision de routage peut être aisément revue en fonction d'informations liées par exemple au lien de communication inter-réseau initialement sélectionné par la fonction de routage basé sur une politique inter-réseau InPBR concernée.

Selon un mode de réalisation particulier, ledit premier élément réseau comportant une fonction de traitement en sortie du processus de routage traditionnel affectée à chaque interface de sortie dudit premier élément réseau et vice versa, le paquet de données est traité par la fonction de traitement en sortie du processus de routage traditionnel affectée à l'interface de sortie sélectionnée par le processus de routage traditionnel avant la révision de la décision de routage par la fonction de routage basé sur une politique inter-réseau InPBR sélectionnée.

Ainsi, des traitements peuvent être aisément appliqués sur les paquets de données à router et/ou des statistiques peuvent être aisément obtenues à partir des paquets de données à router, d'après la décision de routage initialement prise par le processus de routage traditionnel.

Selon un mode de réalisation particulier, ledit premier élément réseau comportant une boucle de contrôle depuis les fonctions de traitement en sortie du processus de routage traditionnel vers les fonctions de routage basé sur une politique inter-réseau InPBR, les fonctions de traitement en sortie du processus de routage traditionnel fournissent aux fonctions de routage basé sur une politique inter-réseau InPBR des informations quant à des traitements appliqués par les fonctions de traitement en sortie du processus de routage traditionnel.

Ainsi, les fonctions de routage basé sur une politique inter-réseau InPBR disposent d'informations, aisément enrichies, vis-à-vis des liens de communication inter-réseau initialement sélectionnés par le processus de routage traditionnel pour router les paquets de données.

Selon un mode de réalisation particulier, le processus de routage traditionnel met en oeuvre le protocole à états de liens OSPF (« Open Shortest Path First » en anglais).

Ainsi, les fonctions de routage basé sur une politique inter-réseau InPBR s'appuient sur une décision préalable de routage prise par un processus de routage traditionnel efficace.

Selon un mode de réalisation particulier, les fonctions de routage basé sur une politique inter-réseau InPBR appliquent des règles de routage exprimées sous forme d'expressions régulières.

Ainsi, la mise à jour des fonctions de routage basé sur une politique inter-réseau InPBR est aisée.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par ledit processeur. L'invention concerne également des moyens de stockage sur lesquels est stocké un tel programme d'ordinateur.

L'invention concerne également un élément réseau, dit premier élément réseau, d'un réseau de communication comportant en outre plusieurs seconds éléments réseau, les premier et seconds éléments réseau étant destinés à être interconnectés par des liens de communication inter-réseaux, le premier élément réseau implémentant un processus de routage traditionnel incluant une prise de décision de routage en fonction de la destination du paquet de données d'après un apprentissage de routes dans le réseau de communication. Le premier élément réseau comporte en outre des moyens pour effectuer une révision de la décision de routage prise par le processus de routage traditionnel par le biais d'une fonction de routage basé sur une politique inter-réseau InPBR sélectionnée parmi une pluralité de fonctions de routage basé sur une politique inter-réseau InPBR candidates dudit premier élément réseau, chaque fonction de routage basé sur une politique inter-réseau InPBR candidate étant affectée à une interface de sortie dudit premier élément réseau et vice versa, la fonction de routage basé sur une politique inter-réseau InPBR sélectionnée étant la fonction de routage basé sur une politique inter-réseau InPBR candidate affectée à l'interface de sortie sélectionnée par le processus de routage traditionnel pour router ledit paquet de données dans le réseau de communication.

L'invention concerne également un réseau de communication comportant des éléments réseau interconnectés par des liens de communication inter-réseaux, chaque élément réseau étant tel que défini ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, la description étant faite en relation avec les dessins joints, parmi lesquels :
[Fig. 1A] illustre schématiquement un agencement d'élément réseau selon l'état de la technique ;
[Fig. 1B] illustre schématiquement un algorithme de décision de routage implémenté par l'élément réseau selon l'état de la technique ;
[Fig. 1C] illustre schématiquement un exemple de résultat de décision de routage selon l'état de la technique ;
[Fig. 1D] illustre schématiquement un autre exemple de résultat de décision de routage selon l'état de la technique ;
[Fig. 2] illustre schématiquement un réseau de communication dans lequel la présente invention peut être implémentée ;
[Fig. 3A] illustre schématiquement un agencement d'élément réseau selon un mode de réalisation de la présente invention ;
[Fig. 3B] illustre schématiquement un agencement d'élément réseau selon un autre mode de réalisation de la présente invention ;
[Fig. 3C] illustre schématiquement un agencement d'élément réseau selon encore un autre mode de réalisation de la présente invention ;
[Fig. 3D] illustre schématiquement un agencement d'élément réseau selon encore un autre mode de réalisation de la présente invention ;
[Fig. 3E] illustre schématiquement un agencement d'élément réseau selon encore un autre mode de réalisation de la présente invention ;
[Fig. 3F] illustre schématiquement un agencement d'élément réseau selon encore un autre mode de réalisation de la présente invention ;
[Fig. 3G] illustre schématiquement un agencement d'élément réseau selon encore un autre mode de réalisation de la présente invention ;
[Fig. 4] illustre schématiquement un agencement matériel de l'élément réseau, selon un mode de réalisation particulier de la présente invention ;
[Fig. 5] illustre schématiquement un algorithme de décision de routage implémenté par l'élément réseau, selon un mode de réalisation particulier de la présente invention ;
[Fig. 6] illustre schématiquement un algorithme de révision de décision de routage implémenté par l'élément réseau, selon un mode de réalisation particulier de la présente invention ;
[Fig. 7] illustre schématiquement un algorithme de gestion de politique d'admission implémenté par l'élément réseau, selon un mode de réalisation particulier de la présente invention ; et
[Fig. 8] illustre schématiquement un exemple de résultat de décision de routage en application de la présente invention.

### EXPOSE DETAILLE DE MODES DE REALISATION

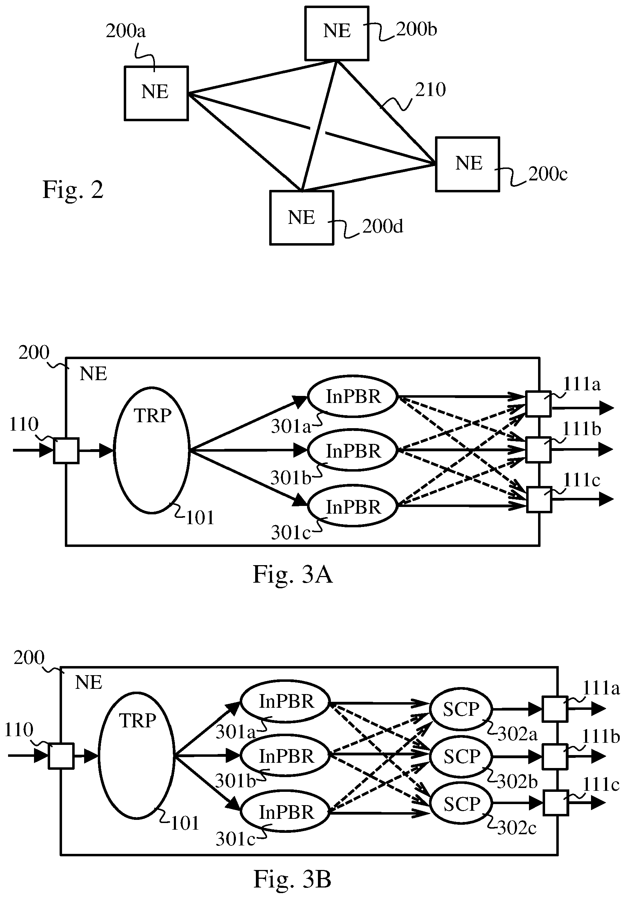

La **Fig. 2** illustre schématiquement un réseau de communication dans lequel la présente invention peut être implémentée. Le réseau de communication comporte des éléments réseau NE 200, qui peuvent être dénommés éléments réseau définis par cognition CDNE (« Cognition Defined Network Element » en anglais). Quatre éléments réseau NE 200a, 200b, 200c et 200d sont illustrés sur la Fig. 2. Les éléments réseau NE 200a, 200b, 200c, 200d sont interconnectés les uns avec les autres par des liens de communication inter-réseaux (« internetwork » en anglais) 210. Chaque lien de communication inter-réseau 210 peut être de type filaire ou sans-fil.

Les éléments réseau NE 200a, 200b, 200c, 200d comportent ainsi autant d'interfaces d'entrée (« ingress interfaces » en anglais), et autant d'interface de sortie (« egress interfaces » en anglais), que de liens de communication inter-réseaux 210 qui leur sont respectivement connectés. Dans le réseau de communication transitent des paquets de données, et préférentiellement des paquets IP (« Internet Protocol » en anglais).

La **Fig. 3A** illustre schématiquement un agencement d'un dit élément réseau NE 200, selon un premier mode de réalisation de la présente invention.

L'élément réseau NE 200 comporte l'ensemble d'interfaces 110, 111a, 111b, 111c déjà mentionné en relation avec la Fig. 1A.

Lorsqu'un paquet de données est reçu via l'interface 110, l'élément réseau NE 200 doit décider vers quelle autre interface 111a, 111b, 111c router le paquet de données reçu. L'élément réseau NE 200 implémente le processus de routage traditionnel TRP 101 déjà mentionné en relation avec la Fig. 1A. Ce processus de routage traditionnel TRP 101 décide, en fonction plus particulièrement de l'adresse du destinataire du paquet de données reçu, vers quelle interface 111a, 111b, 111c router ledit paquet de données afin que ledit paquet de données puisse atteindre le destinataire visé. Préférentiellement, le processus de routage traditionnel TRP 101 inclut uniquement le processus de routage automatique ARP, mais peut aussi inclure du routage basé sur une politique PBR. Le processus de routage automatique ARP implémente par exemple le protocole à vecteur de distance RIP (« Routing Information Protocol » en anglais) tel que défini dans le document normatif RFC 2453, ou le protocole à états de liens OSPF (« Open Shortest Path First » en anglais) tel que défini dans le document normatif RFC 5340, ou le protocole à états de liens IS-IS (« Intermediate System to Intermediate System » en anglais) tel que défini dans le document normatif RFC 1142, ou le protocole à vecteur de distance IGRP (« Interior Gateway Routing Protocol » en anglais) tel que développé par la société Cisco, ou le protocole d'échange de routes BGP (« Border Gateway Protocol » en anglais) tel que défini dans le document normatif RFC 4271.

Ce processus de routage traditionnel TRP 101 sélectionne ainsi, en fonction de la décision de routage prise, vers quelle interface 111a, 111b, 111c router ledit paquet de données, et donc sélectionne le lien de communication inter-réseau 210 correspondant (ce qui définit le prochain élément réseau NE 200 en route pour atteindre le destinataire visé).

L'élément réseau NE 200 comporte en outre autant de fonctions de routage basé sur une politique inter-réseau InPBR (« Internetwork PBR » en anglais) que d'interfaces de sortie candidates 111a, 111b, 111c. Chaque fonction de routage basé sur une politique inter-réseau InPBR est affectée à une interface de sortie candidate 111a, 111b, 111c en particulier, et vice versa. Cela permet d'adopter un comportement dynamique de transfert de paquets de données par l'élément réseau NE 200 pour chacun des liens de communication inter-réseaux 210 qui lui sont connectés. Sur la Fig. 3A, une première fonction de routage basé sur une politique inter-réseau InPBR 310a est ainsi affectée à l'interface de sortie candidate 11 1a, une seconde fonction de routage basé sur une politique inter-réseau InPBR 310b est ainsi affectée à l'interface de sortie candidate 111b, et une troisième fonction de routage basé sur une politique inter-réseau InPBR 310c est ainsi affectée à l'interface de sortie candidate 111c. De plus, chaque fonction de routage basé sur une politique inter-réseau InPBR 310a, 310b, 310c est connectée à chaque interface de sortie candidate 111a, 111b, 111c, de manière à pouvoir éventuellement remettre en cause la décision de routage prise par le processus de routage traditionnel TRP 101.

En sélectionnant le lien de communication inter-réseau 210 correspondant à sa décision de routage, le processus de routage traditionnel TRP 101 sélectionne la fonction de routage basé sur une politique inter-réseau InPBR 310a, 310b, 310c correspondante et lui propage le paquet de données reçu. Ainsi, implicitement, l'étage de fonctions de routage basé sur une politique inter-réseau InPBR est informé de la décision de routage prise par le processus de routage traditionnel TRP 101. Cela permet d'éviter de devoir dupliquer, au sein des fonctions de routage basé sur une politique inter-réseau InPBR 310a, 310b, 310c, les critères de décision de routage qui sont définis au sein processus de routage traditionnel TRP 101, et cela évite aux fonctions de routage basé sur une politique inter-réseau InPBR 310a, 310b, 310c de devoir apprendre les routes possibles dans le réseau de communication.

Les fonctions de routage basé sur une politique inter-réseau InPBR 310a, 310b, 310c sont configurées pour réviser la décision de routage prise par le processus de routage traditionnel TRP 101. La fonction de routage basé sur une politique inter-réseau InPBR 310a, 310b, 310c en question est donc capable de soit confirmer la décision de routage prise par le processus de routage traditionnel TRP 101, soit d'infirmer cette décision et de router le paquet de données reçu vers une autre interface de sortie et donc un autre lien de communication inter-réseau 210.

La **Fig. 3B** illustre schématiquement un agencement des éléments réseau NE 200, selon un second mode de réalisation de la présente invention. Comparativement à l'agencement de la Fig. 3A, l'agencement de la Fig. 3B introduit des points de contrôle de service SCP (« Service Control Point » en anglais). Chaque point de contrôle de service SCP est affecté à une interface de sortie candidate 111a, 111b, 111c en particulier, et vice versa. Un premier point de contrôle de service SCP 302a est ainsi affecté à l'interface de sortie candidate 111a, un second point de contrôle de service SCP 302b est ainsi affecté à l'interface de sortie candidate 111b, et un troisième point de contrôle de service SCP 302c est ainsi affecté à l'interface de sortie candidate 111c.

Les points de contrôle de service SCP 302a, 302b, 302c incluent des mécanismes de gestion de qualité de service QoS (« Quality of Service » en anglais), et plus particulièrement un mécanisme d'application d'admission (« Admission Enforcement » en anglais) et un point d'application de politique PEP (« Policy Enforcement Point » en anglais), tel qu'un mécanisme de mise en queue pondérée équitable WFQ (« Weighted Fair Queuing » en anglais) qui permet un ordonnancement (« scheduling » en anglais) par priorité de valeurs de champ DSCP (« Differentiated Services Code Point » en anglais) de paquets IP. Le mécanisme d'application d'admission est un mécanisme d'admission de services utilisé pour limiter le niveau de congestion de trafic sur un lien de communication inter-réseau 210, et qui vise plus particulièrement à anticiper des survenues de congestion, en limitant le débit ou en suspendant certains flux de paquets de données sur ledit lien de communication inter-réseau 210. Par exemple, ces mécanismes de gestion de qualité de service QoS visent à aligner l'admission de services aux capacités effectives de transmission sur les liens de communication inter-réseaux 210 concernés, ce qui est plus particulièrement avantageux lorsque les liens de communication inter-réseaux 210 concernés sont des liens radio, pour lesquels la bande passante effective est susceptible de varier significativement au fil du temps.

Les fonctions de routage basé sur une politique inter-réseau InPBR 310a, 310b, 310c et les points de contrôle de service SCP 302a, 302b, 302c peuvent ainsi être utilisés en combinaison pour atteindre un même objectif de gestion de congestion, *e.g*. évitement de congestion (« congestion avoidance » en anglais), de réponse à des menaces, de gestion de qualité d'expérience QoE (« Quality of Expérience » en anglais), d'optimisation de coûts de route, et d'optimisation énergétique.

Lorsqu'une fonction de routage basé sur une politique inter-réseau InPBR 310a, 310b, 310c sélectionne une interface de sortie candidate 111a, 111b, 111c pour router le paquet de données reçu, ladite fonction de routage basé sur une politique inter-réseau InPBR 310a, 310b, 310c propage ledit paquet de données au point de contrôle de service SCP affecté à l'interface de sortie candidate 11 1a, 111b, 111c sélectionnée. Le point de contrôle de service SCP concerné traite ledit paquet de données et le propage ensuite vers l'interface de sortie 11 1a, 111b, 111c à laquelle ledit point de contrôle de service SCP est affecté.

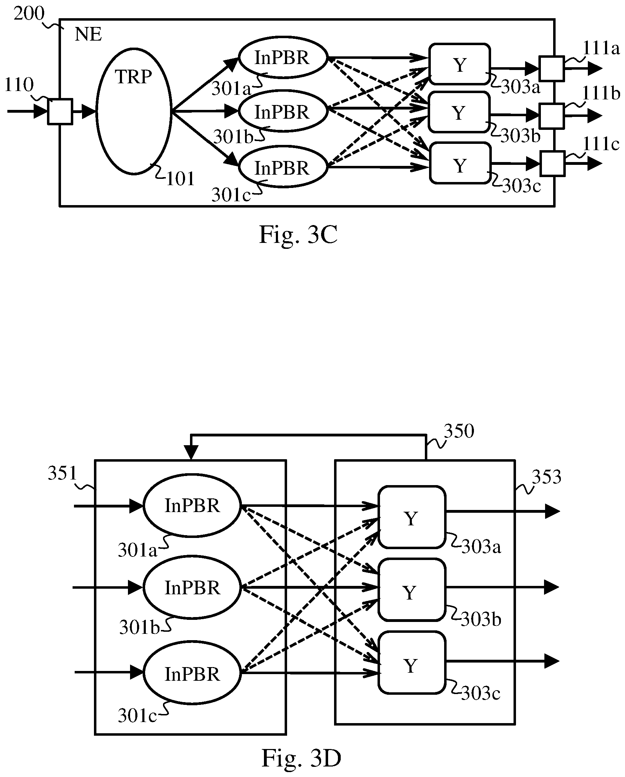

La **Fig. 3C** illustre schématiquement un agencement des éléments réseau NE 200, selon un troisième mode de réalisation de la présente invention. Comparativement à l'agencement de la Fig. 3A, l'agencement de la Fig. 3C introduit des fonctions Y de traitement en sortie de l'élément réseau NE 200, ou plus précisément après que l'étage de fonctions de routage basé sur une politique inter-réseau InPBR 310a, 310b, 310c ait pris sa décision de routage. Chaque fonction Y est affectée à une interface de sortie candidate 111a, 111b, 111c en particulier, et vice versa. Une première fonction Y 303a est ainsi affectée à l'interface de sortie candidate 111a, une seconde fonction Y 303b est ainsi affectée à l'interface de sortie candidate 111b, et une troisième fonction Y 303c est ainsi affectée à l'interface de sortie candidate 111c.

Les fonctions Y peuvent être de différentes natures, comme par exemple des fonctions client (« customer functions » en anglais), des fonctions commerciales (« business functions » en anglais), des fonctions de sécurité (« security functions » en anglais) ou des fonctions réseau (« network functions » en anglais). Les fonctions Y peuvent être des fonctions réseau d'analyse de trafic, *e.g*. d'inspection de paquets en profondeur DPI (« Deep Packet Inspection » en anglais) ou de métrologie de flux de données, des fonctions de politique, des fonctions de localisation ou une combinaison de ces fonctions réseau. Par exemple, les fonctions Y peuvent intégrer des fonctions de vérification d'accessibilité, via les interfaces de sortie 11 1a, 111b, 111c respectivement affectées auxdites fonctions Y, du destinataire visé par le paquet de données reçu.

Lorsqu'une fonction de routage basé sur une politique inter-réseau InPBR 310a, 310b, 310c sélectionne une interface de sortie candidate 111a, 111b, 111c pour router le paquet de données reçu, ladite fonction de routage basé sur une politique inter-réseau InPBR 310a, 310b, 310c propage ledit paquet de données à la fonction Y affectée à l'interface de sortie candidate 11 1a, 111b, 111c sélectionnée. La fonction Y concernée traite ledit paquet de données et le propage ensuite vers l'interface de sortie 11 1a, 111b, 111c à laquelle ladite fonction Y est affectée.

La **Fig. 3D** illustre schématiquement un agencement des éléments réseau NE 200, selon un quatrième mode de réalisation de la présente invention. L'agencement de la Fig. 3D reprend celui de la Fig. 3C. Une boucle de retour 350 relie l'étage de fonctions Y 353 à l'étage de fonctions de routage basé sur une politique inter-réseau InPBR 351.

Grâce à la boucle de retour 350, l'étage de fonctions Y 353 fournit à l'étage de fonctions de routage basé sur une politique inter-réseau InPBR 351 des informations quant aux traitements appliqués par la fonction Y 303a, 303b, 303c concernée sur le paquet de données à router. Cela permet aux fonctions de routage basé sur une politique inter-réseau InPBR 301a, 301b, 301c d'adapter leurs décisions de routage en fonction des retours effectués par les fonctions Y 303a, 303b, 303c. La boucle de retour 350 peut notamment être utilisée pour demander à l'étage de fonctions de routage basé sur une politique inter-réseau InPBR 351 de revoir sa décision de routage en fonction de nouvelles informations fournies simultanément par l'étage de fonctions Y 353 via ladite boucle de retour 350.

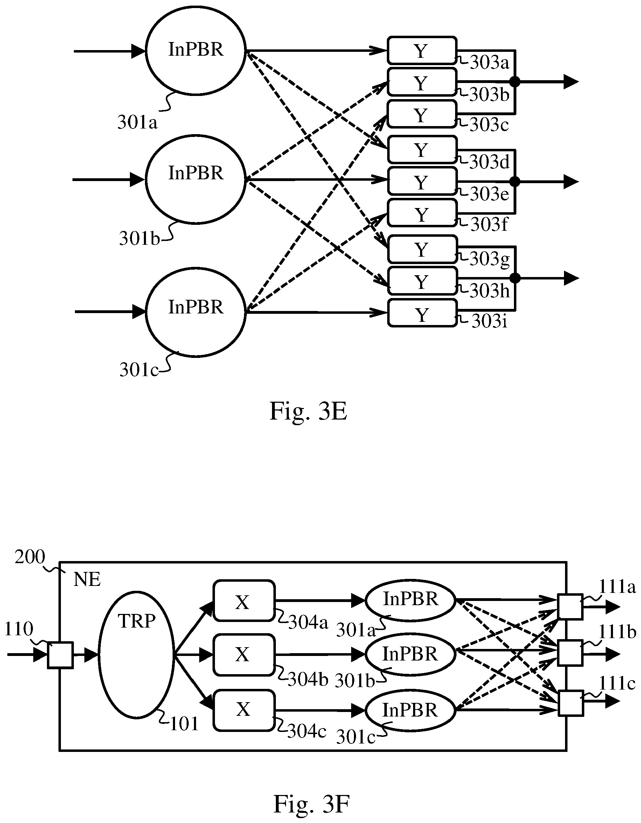

La **Fig. 3E** illustre schématiquement un agencement des éléments réseau NE 200, selon un cinquième mode de réalisation de la présente invention. Comparativement à l'agencement de la Fig. 3C, l'agencement de la Fig. 3E introduit, pour chaque interface de sortie candidate 111a, 111b, 111c, autant de fonctions Y que de fonctions de routage basé sur une politique inter-réseau InPBR dans l'élément réseau NE 200. Une première fonction Y 303a est ainsi affectée à l'interface de sortie candidate 111a en provenance de la fonction de routage basé sur une politique inter-réseau InPBR 301a ; une seconde fonction Y 303b est ainsi affectée à l'interface de sortie candidate 111a en provenance de la fonction de routage basé sur une politique inter-réseau InPBR 301b ; une troisième fonction Y 303c est ainsi affectée à l'interface de sortie candidate 111a en provenance de la fonction de routage basé sur une politique inter-réseau InPBR 301c ; une quatrième fonction Y 303d est ainsi affectée à l'interface de sortie candidate 111b en provenance de la fonction de routage basé sur une politique inter-réseau InPBR 301a ; une cinquième fonction Y 303e est ainsi affectée à l'interface de sortie candidate 111b en provenance de la fonction de routage basé sur une politique inter-réseau InPBR 301b ; une sixième fonction Y 303f est ainsi affectée à l'interface de sortie candidate 111b en provenance de la fonction de routage basé sur une politique inter-réseau InPBR 301c ; une septième fonction Y 303g est ainsi affectée à l'interface de sortie candidate 111c en provenance de la fonction de routage basé sur une politique inter-réseau InPBR 301a ; une huitième fonction Y 303h est ainsi affectée à l'interface de sortie candidate 111c en provenance de la fonction de routage basé sur une politique inter-réseau InPBR 301b ; et une neuvième fonction Y 303i est ainsi affectée à l'interface de sortie candidate 111c en provenance de la fonction de routage basé sur une politique inter-réseau InPBR 301c.

Lorsqu'une fonction de routage basé sur une politique inter-réseau InPBR 310a, 310b, 310c sélectionne une interface de sortie candidate 111a, 111b, 111c pour router le paquet de données reçu, ladite fonction de routage basé sur une politique inter-réseau InPBR 310a, 310b, 310c propage ledit paquet de données à la fonction Y placée entre ladite fonction de routage basé sur une politique inter-réseau InPBR 310a, 310b, 310c et l'interface de sortie candidate 111a, 111b, 111c sélectionnée. La fonction Y concernée traite ledit paquet de données et le propage ensuite vers l'interface de sortie 111a, 111b, 111c à laquelle ladite fonction Y est affectée.

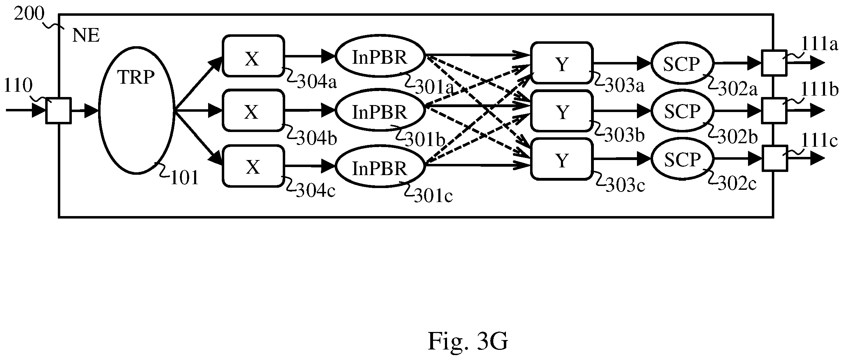

A noter que l'agencement de la Fig. 3^{E} peut inclure la boucle de retour 350 de la Fig. 3D.

La **Fig. 3F** illustre schématiquement un agencement des éléments réseau NE 200 selon un sixième mode de réalisation de la présente invention. Comparativement à l'agencement de la Fig. 3A, l'agencement de la Fig. 3F introduit des fonctions X de traitement en sortie du processus de routage traditionnel TRP 101, ou plus précisément avant que l'étage de fonctions de routage basé sur une politique inter-réseau InPBR 310a, 310b, 310c ne prenne sa décision de routage. Vu du processus de routage traditionnel TRP 101, chaque fonction X est affectée à une interface de sortie candidate 111a, 111b, 111c en particulier, et vice versa. Une première fonction X 304a est ainsi affectée à l'interface de sortie candidate 11 1a (c'est-à-dire à la fonctions de routage basé sur une politique inter-réseau InPBR 310a), une seconde fonction X 304b est ainsi affectée à l'interface de sortie candidate 111b (c'est-à-dire à la fonctions de routage basé sur une politique inter-réseau InPBR 310b), et une troisième fonction X 304c est ainsi affectée à l'interface de sortie candidate 11 1c (c'est-à-dire à la fonctions de routage basé sur une politique inter-réseau InPBR 310c).

Les fonctions X peuvent être de différentes natures, comme par exemple des fonctions client, des fonctions commerciales, des fonctions de sécurité ou des fonctions réseau. Les fonctions X peuvent être des fonctions réseau d'analyse de trafic, *e.g.* d'inspection de paquets en profondeur DPI ou de métrologie de flux de données, des fonctions de politique, des fonctions de localisation ou une combinaison de ces fonctions réseau.

Lorsque le processus de routage traditionnel TRP 101 sélectionne une interface de sortie candidate 111a, 111b, 111c pour router le paquet de données reçu, le processus de routage traditionnel TRP 101 propage ledit paquet de données à la fonction X affectée à l'interface de sortie candidate 111a, 111b, 111c sélectionnée. La fonction X concernée traite ledit paquet de données et le propage ensuite vers la fonctions de routage basé sur une politique inter-réseau InPBR 310a, 310b, 310c affectée à l'interface de sortie 111a, 111b, 111c à laquelle ladite fonction X est aussi affectée.

Dans un mode de réalisation particulier, une boucle de contrôle relie l'étage de fonctions X à l'étage de fonctions de routage basé sur une politique inter-réseau InPBR 351 (à la manière de la boucle de retour 350). Cela permet à l'étage de fonctions X de fournir des informations quant aux traitements appliqués par la fonction X 304a, 304b, 304c concernée sur le paquet de données à router, *e.g.* suite à une inspection de paquets en profondeur DPI, à l'étage de fonctions de routage basé sur une politique inter-réseau InPBR 351. Cela permet par exemple à l'étage de fonctions X de forcer la décision de l'étage de fonctions de routage basé sur une politique inter-réseau InPBR 351.

La **Fig. 3G** illustre schématiquement un agencement des éléments réseau NE 200, selon un septième mode de réalisation de la présente invention. Dans l'agencement de la Fig. 3G, les éléments réseau NE 200 intègrent les fonctions X, les fonctions Y, les points de contrôle de services SCP susmentionnés. Les fonctions Y peuvent y être agencées comme illustré sur la Fig. 3E. La boucle de retour 350 de la Fig. 3D peut être ajoutée, ainsi que la boucle de contrôle susmentionnée entre l'étage de fonctions X et l'étage de fonctions de routage basé sur une politique inter-réseau InPBR 351. Cela apporte une grande flexibilité à la configuration des règles de routage et des traitements à effectuer sur les paquets de données en transit.

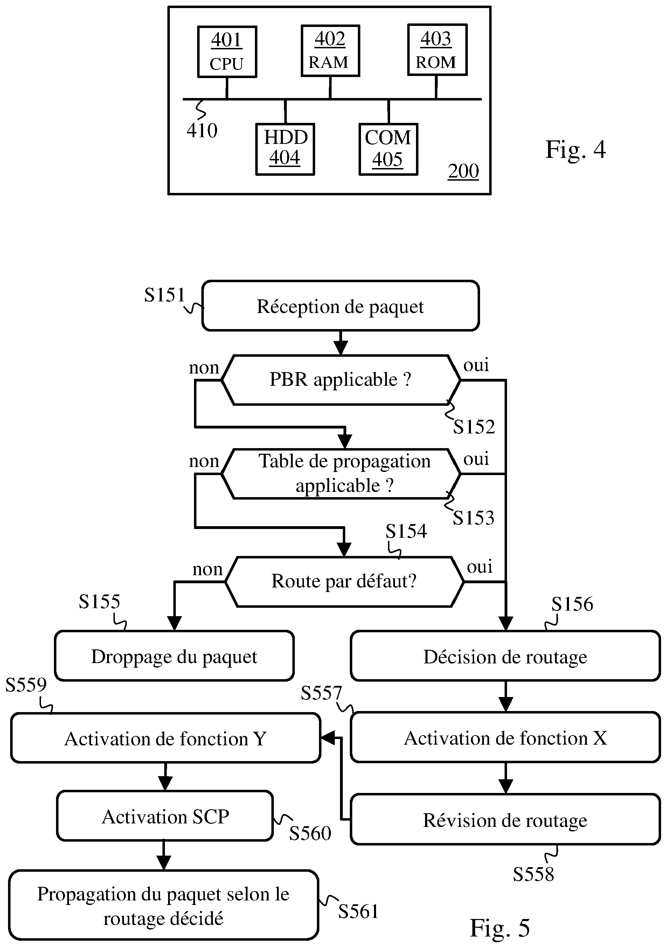

La **Fig. 4** illustre schématiquement un agencement matériel de l'élément réseau NE 200, selon un mode de réalisation particulier de la présente invention.

L'élément réseau NE 200 inclut alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage 404, telle qu'un disque dur HDD (« Hard Disk Drive » en anglais), ou un lecteur de support de stockage, tel qu'un lecteur de cartes SD (« Secure Digital » en anglais) ; et un ensemble d'au moins trois interfaces de communication COM 405 configurée pour permettre à l'élément réseau NE 200 de communiquer avec d'autres éléments réseau NE 200 dans le réseau de communication via les liens de communication inter-réseaux 210.

Le processeur 401 est capable d'exécuter des instructions chargées dans la mémoire vive RAM 402 à partir de la mémoire morte ROM 403, ou d'une mémoire externe, ou d'un support de stockage, ou d'un réseau de communication. Lorsque l'élément réseau NE 200 est mis sous tension, le processeur 401 est capable de lire de la mémoire vive RAM 402 des instructions et de les exécuter. Ces instructions forment un programme d'ordinateur causant l'implémentation, par le processeur 401, de tout ou partie des algorithmes et étapes décrits ci-après.

Tout ou partie des algorithmes et étapes décrits ci-après, ainsi que les architectures présentées ci-dessus en relation avec les Figs. 3A à 3G, peuvent ainsi être implémentés sous forme logicielle par exécution d'un ensemble d'instructions par une machine programmable, par exemple un DSP (« Digital Signal Processor » en anglais) ou un microprocesseur, ou être implémentés sous forme matérielle par une machine ou un composant (« chip » en en anglais) dédié ou un ensemble de composants (« chipset » en anglais) dédié, comme par exemple un composant FPGA (« Field-Programmable Gate Array » en anglais) ou un composant ASIC (« Application-Specific Integrated Circuit » en anglais). D'une manière générale, l'élément réseau NE 200 comporte de la circuiterie électronique configurée pour implémenter les architectures présentées ci-dessus en relation avec les Figs. 3A à 3G, et les algorithmes et étapes décrits ci-après.

La **Fig. 5** illustre schématiquement un algorithme de décision de routage implémenté par l'élément réseau NE 200, selon un mode de réalisation particulier de la présente invention. L'algorithme de la Fig. 5 reprend des étapes de l'algorithme de la Fig. 1A, excepté que ces étapes sont exécutées par l'élément réseau NE 200 au lieu de l'élément réseau NE 100.

Dans l'étape S151, l'élément réseau NE 200 reçoit un paquet de données via une interface d'entrée dudit élément réseau NE 200.

Dans l'étape S152, l'élément réseau NE 100 vérifie si le paquet reçu correspond à une règle de routage PBR. Si tel est le cas, l'étape S156 est effectuée, dans laquelle l'élément réseau NE 100 prend une décision de routage conforme à la règle de routage PBR à laquelle correspond ledit paquet de données reçu, et une étape S557 est ensuite effectuée ; sinon, l'étape S153 est effectuée.

Dans l'étape S153, l'élément réseau NE 200 se tourne vers le processus de routage automatique ARP, et vérifie si le paquet reçu correspond à une règle de routage dans la table de propagation. Si tel est le cas, l'étape S156 est effectuée, dans laquelle l'élément réseau NE 200 prend une décision de routage conforme à la règle de routage trouvée dans la table de propagation et à laquelle correspond ledit paquet de données reçu, et l'étape S557 est ensuite effectuée ; sinon, l'étape S154 est effectuée.

A noter que l'élément réseau NE 200 peut ne pas implémenter de règles de routage PBR au sein du processus de routage traditionnel TRP 101. Dans ce cas, l'algorithme de la Fig. 5 passe directement de l'étape S151 à l'étape S153.

Dans l'étape S154, l'élément réseau NE 200 vérifie si le paquet reçu correspond à une route par défaut. Si tel est le cas, l'étape S156 est effectuée, dans laquelle l'élément réseau NE 200 prend une décision de routage conforme à la route par défaut, et l'étape S557 est ensuite effectuée ; sinon, l'étape S155 est effectuée.

Dans l'étape S155, l'élément réseau NE 200 considère être incapable de prendre une décision de routage concernant le paquet de données reçu et effectue alors un droppage du paquet de données ; au contraire, dans l'étape S557, le processus de routage traditionnel TRP 101 de l'élément réseau NE 200 a été capable de prendre une décision de routage concernant le paquet de données reçu. La décision prise par le processus de routage traditionnel TRP 101 dans l'étape S156 peut toutefois être remise en cause par l'étage de fonctions de routage basé sur une politique inter-réseau InPBR 351.

Ainsi, dans l'étape S557, l'élément réseau NE 200 applique optionnellement la fonction X affectée à l'interface de sortie candidate 11 1a, 111b, 111c sélectionnée par le processus de routage traditionnel TRP 101 à l'issue de l'étape S156.

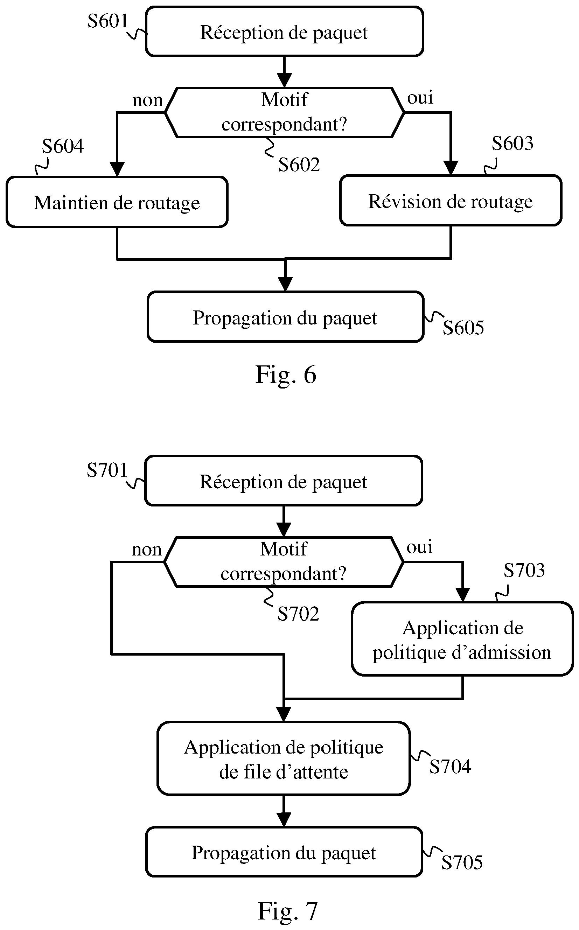

Dans une étape S558, l'élément réseau NE 200 se tourne vers la fonction de routage basé sur une politique inter-réseau InPBR affectée à l'interface de sortie candidate 111a, 111b, 111c sélectionnée par le processus de routage traditionnel TRP 101 à l'issue de l'étape S156. La décision de routage prise par le processus de routage traditionnel TRP 101 à l'issue de l'étape S156 est ainsi confirmée ou infirmée. Un mode de réalisation est décrit ci-après en relation avec la Fig. 6.

Dans une étape S559, l'élément réseau NE 200 applique optionnellement la fonction Y affectée à l'interface de sortie candidate 11 1a, 111b, 111c sélectionnée par la fonction de routage basé sur une politique inter-réseau InPBR concernée à l'étape S558.

Dans une étape S560, l'élément réseau NE 200 effectue optionnellement un traitement par le point de contrôle de service SCP affecté à l'interface de sortie candidate 111a, 111b, 111c sélectionnée par la fonction de routage basé sur une politique inter-réseau InPBR concernée à l'étape S558 et affecté éventuellement en outre à ladite fonction de routage basé sur une politique inter-réseau InPBR concernée à l'étape S558 (voir Fig. 3E). Un mode de réalisation est décrit ci-après en relation avec la Fig. 7.

Dans une étape S561, l'élément réseau NE 200 applique la décision de routage prise dans l'étape S156 et éventuellement revue à l'étape S558, et transmet en conséquence le paquet de données via son interface de sortie correspondante.

La **Fig. 6** illustre schématiquement un algorithme de révision de décision de routage implémenté par l'élément réseau NE 200, selon un mode de réalisation particulier de la présente invention. L'algorithme de la Fig. 6 est plus précisément implémenté par chaque fonction de routage basé sur une politique inter-réseau InPBR.

Dans une étape S601, la fonction de routage basé sur une politique inter-réseau InPBR en question reçoit un paquet de données dont la décision de routage doit être confirmée ou infirmée. La fonction de routage basé sur une politique inter-réseau InPBR en question est affectée à l'interface de sortie candidate 111a, 111b, 111c sélectionnée par le processus de routage traditionnel TRP 101. La décision de routage concernant ledit paquet de données qui a été prise par le processus de routage traditionnel TRP 101 est donc implicitement connue par l'étage de fonction de routage basé sur une politique inter-réseau InPBR 351.

Dans une étape S602, la fonction de routage basé sur une politique inter-réseau InPBR vérifie si le paquet de données reçu correspond à une règle de routage prédéfinie au sein de ladite fonction de routage basé sur une politique inter-réseau InPBR.

Les règles de routage sont préférentiellement exprimées sous forme d'expressions régulières, appelées « RegEx ». Les expressions régulières contiennent une partie « condition » et une partie « action », la partie « condition » définissant une ou plusieurs conditions à remplir par le paquet de données pour qu'une ou plusieurs actions, telles que définies dans la partie « action », soient appliquées audit paquet de données.

Par exemple, une expression régulière peut définir que tous les paquets d'une instance applicative particulière, donc de niveau L-7 dans le modèle OSI (« Open Systems Interconnection » en anglais), suivent une route prédéfinie dans le réseau de communication. Selon un autre exemple, une expression régulière peut définir que tous les paquets de données contenant un champ TOS (« Type of Service » en anglais) de valeur hexadécimale « 0xEF » soient routés vers l'interface de sortie 11 1a, et que le routage des autres paquets de données s'effectue comme décidé par le processus de routage traditionnel TRP 101. Ainsi, il est aisé de programmer un délestage sélectif, *e.g.* par instance d'application génératrice du paquet de données ou par type d'application génératrice du paquet de données, de certains liens de communication inter-réseaux 210, alors que le processus de routage automatique ARP forcerait le routage par rapport à la destination des paquets de données. Un tel délestage sélectif peut être mis en place pour des questions de préservation de bande passante, de contrôle de qualité d'expérience QoE, mais aussi pour des questions de sécurité, de sorte à assurer que certains flux de données ne transitent pas sur certains liens de communication inter-réseaux 210 dont la fiabilité serait incertaine.

La fonction de routage basé sur une politique inter-réseau InPBR recherche donc si le paquet de données reçu correspond un motif (« pattern » en anglais) de RegEx prédéfini. Si tel est le cas, une étape S603 est effectuée ; sinon, une étape S604 est effectuée.

Dans l'étape S603, la fonction de routage basé sur une politique inter-réseau InPBR revoit la décision de routage du paquet de données, en appliquant la règle de routage à laquelle correspond ledit paquet de données. La décision de routage à appliquer, qui peut être finalement la même que celle prise par le processus de routage traditionnel TRP 101, est définie dans la partie « action » de l'expression régulière pour laquelle le paquet de données remplit les conditions de la partie « condition ». Cela signifie que la partie « action » de chaque expression régulière de règle de routage indique au minimum vers quelle interface de sortie router chaque paquet de données qui correspond à la partie « condition » de ladite expression régulière. Puis, une étape S605 est effectuée.

De manière complémentaire à la revue de décision de routage, la fonction de routage basé sur une politique inter-réseau InPBR peut appliquer un traitement sur le paquet de données. Un tel traitement est indiqué dans la partie « action » de l'expression régulière concernée. Un tel traitement est par exemple un marquage dudit paquet de données, une encapsulation dudit paquet de données, voire une des-encapsulation dudit paquet de données.

Dans un mode de réalisation particulier, la fonction de routage basé sur une politique inter-réseau InPBR applique un marquage des paquets de données pour lesquels ladite fonction de routage basé sur une politique inter-réseau InPBR modifie la décision de routage prise par le processus de routage traditionnel TRP 101.

Par exemple, la fonction de routage basé sur une politique inter-réseau InPBR inscrit, dans un champ prédéfini dudit paquet de données, un identifiant tel qu'un identifiant de couleur CID (« Color IDentifier » en anglais) qui est attribué de manière unique à ladite fonction de routage basé sur une politique inter-réseau InPBR dans le réseau de communication. Un tel marquage permet de gérer les situations de boucle dans le réseau de communication, ladite fonction de routage basé sur une politique inter-réseau InPBR pouvant ainsi reconnaître les paquets de données pour lesquels ladite fonction de routage basé sur une politique inter-réseau InPBR a modifié la décision de routage prise par le processus de routage traditionnel TRP 101, et leur appliquer un traitement dédié par le biais d'une règle de routage, RegEx, prédéfinie adaptée, et ainsi éviter que le paquet de données ne continue de boucler dans le réseau de communication. Le champ de durée de vie TTL (« Time To Live » en anglais) de paquets de données IP peut être utilisé pour inscrire l'identifiant de couleur CID. En effet, en implémentant un contrôle de boucle sur la base des identifiants de couleur CID dans un réseau de communication structuré uniquement par des éléments réseau conformes à l'élément réseau NE 200, le champ TTL des paquets de données IP n'est pas strictement nécessaire et peut donc être utilisé différemment que préconisé dans le document normatif RFC 791 sans perte de fonctionnalité.

Dans l'étape S604, la fonction de routage basé sur une politique inter-réseau InPBR confirme la décision de routage prise par le processus de routage traditionnel TRP 101. En effet, cela signifie que le paquet de données ne correspond à aucune règle de routage, et l'étape S605 est ensuite effectuée.

Dans l'étape S605, la fonction de routage basé sur une politique inter-réseau InPBR propage le paquet de données selon la décision de routage prise par le processus de routage traditionnel TRP 101, ou le cas échéant, revue à l'étape S603.

La **Fig. 7** illustre schématiquement un algorithme de gestion de politique d'admission implémenté par l'élément réseau NE 200, selon un mode de réalisation particulier de la présente invention. L'algorithme de la Fig. 7 est plus précisément implémenté par chaque point de contrôle de service SCP.

Dans une étape S701, le point de contrôle de service SCP en question reçoit un paquet de données dont la décision de routage a été confirmée ou infirmée par la fonction de routage basé sur une politique inter-réseau InPBR affectée à l'interface de sortie 111a, 111b, 111c sélectionnée à l'origine par le processus de routage traditionnel TRP 101. Le point de contrôle de service SCP est, quant à lui, affecté à l'interface de sortie 111a, 111b, 111c finalement retenue par ladite fonction de routage basé sur une politique inter-réseau InPBR.

Dans une étape S702, le point de contrôle de service SCP vérifie si le paquet de données reçu correspond à une règle de politique d'admission prédéfinie au sein du point de contrôle de service SCP. Comme les règles de routage des fonctions de routage basé sur une politique inter-réseau InPBR, les règles de politique d'admission sont préférentiellement exprimées sous forme d'expressions régulières, « RegEx ».

Le point de contrôle de service SCP recherche donc si le paquet de données reçu correspond un motif (« pattern » en anglais) de RegEx prédéfini. Si tel est le cas, une étape S703 est effectuée ; sinon, une étape S704 est effectuée.

Dans l'étape S703, le point de contrôle de service SCP applique la règle de politique d'admission à laquelle correspond ledit paquet de données. La politique d'admission est définie dans la partie « action » de l'expression régulière pour laquelle le paquet de données remplit les conditions de la partie « condition ». Puis l'étape S704 est effectuée.

Dans l'étape S704, le point de contrôle de service SCP applique une politique de file d'attente sur le paquet de données.

Dans une étape S705, le point de contrôle de service SCP propage le paquet de données vers l'interface de sortie 111a, 111b, 111c à laquelle ledit point de contrôle de service SCP est affecté.

Les fonctions de routage basé sur une politique inter-réseau InPBR, les points de contrôle de service SCP, les fonctions X et les fonctions Y peuvent ainsi être définis par des plans de contrôle distincts ou identiques, de manière centralisée ou distribuée. Cela amène une grande flexibilité de configuration des éléments réseau NE 200, ce qui permet de réaliser des délestages sélectifs de liens de communication inter-réseaux 210, et ce, sur des critères variés : routage par connaissance de service (« service aware routing » en anglais), routage par connaissance de qualité de service QoS (« QoS aware routing » en anglais), routage par connaissance de performance (« performance aware routing » en anglais), routage par connaissance de coût énergétique (« energy aware routing » en anglais), etc. La configuration des fonctions de routage basé sur une politique inter-réseau InPBR, des points de contrôle de service SCP, des fonctions X et des fonctions Y peuvent être réalisées manuellement, par un installateur grâce à une interface de configuration de l'élément réseau NE 200 concerné, ou automatiquement, grâce à un moteur de contrôle (« control engine » en anglais), tel qu'un contrôleur de réseau défini par logiciel SDN (« Software Defined Network » en anglais), un orchestrateur réseau ou un moteur d'intelligence artificielle.

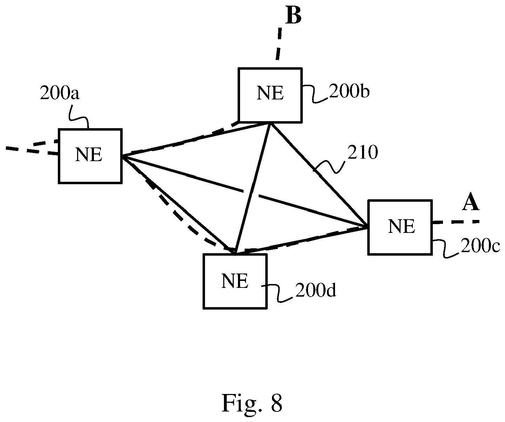

Etant donné que les fonctions de routage basé sur une politique inter-réseau InPBR, les points de contrôle de service SCP, les fonctions X et les fonctions Y sont placés en aval du processus de routage traditionnel TRP 101, les actions appliquées ont implicitement connaissance des routes impliquées, ce qui permet d'appliquer des actions de délestage avec précision. En reprenant l'exemple cité en partie introductive, l'utilisation de fonctions de routage basé sur une politique inter-réseau InPBR permet d'obtenir le routage représenté sur la **Fig. 8** au lieu de celui représenté sur la Fig. 1D. Sur la Fig. 8, le flux de paquets de données A est routé entre l'élément réseau NE 200a et l'élément réseau NE 200c via l'élément réseau NE 200d, alors que le flux de paquets de données B est directement routé entre l'élément réseau NE 100a et l'élément réseau NE 200b. Pour rappel, le processus de routage automatique ARP se basant sur un protocole de routage cherchant le chemin le plus court aurait routé le flux de paquets de données A directement entre l'élément réseau NE 200a et l'élément réseau NE 200c (voir Fig. 1C). Pour rappel, les règles de routage PRB du processus de routage traditionnel TRP 101 auraient dérouté à la fois le flux de paquets de données A et le flux de paquets de données B (voir Fig. 1D), à moins d'avoir dupliqué l'apprentissage de routes dans lesdites règles de routage PRB du processus de routage traditionnel TRP 101. En paramétrant la fonction de routage basé sur une politique inter-réseau InPBR affectée à l'interface de sortie de l'élément réseau NE 200a qui interconnecte directement le lien à délester, on évite de délester de manière non désirée d'autres liens de communication inter-réseaux 210.

## Revendications

1. Procédé pour router un paquet de données par un premier élément réseau (200, 200a) d'un réseau de communication comportant en outre plusieurs seconds éléments réseau (200, 200b, 200c, 200d), les premier (200, 200a) et seconds (200, 200b, 200c, 200d) éléments réseau étant interconnectés par des liens de communication inter-réseaux (210), le procédé de routage comportant un processus de routage traditionnel (101) incluant une prise de décision de routage en fonction de la destination du paquet de données d'après un apprentissage de routes dans le réseau de communication, **caractérisé en ce que** le procédé de routage comporte en outre une révision de la décision de routage prise par le processus de routage traditionnel par le biais d'une fonction de routage basé sur une politique inter-réseau InPBR (301a) sélectionnée parmi une pluralité de fonctions de routage basé sur une politique inter-réseau InPBR candidates (301a, 301b, 301c) dudit premier élément réseau (200, 200a), chaque fonction de routage basé sur une politique inter-réseau InPBR candidate (301a, 301b, 301c) étant affectée à une interface de sortie (111a, 111b, 111c) dudit premier élément réseau (200, 200a) et vice versa, la fonction de routage basé sur une politique inter-réseau InPBR sélectionnée (301a) étant la fonction de routage basé sur une politique inter-réseau InPBR candidate (301a, 301b, 301c) affectée à l'interface de sortie (111a) sélectionnée par le processus de routage traditionnel (101) pour router ledit paquet de données dans le réseau de communication.

2. Procédé selon la revendication 1, dans lequel, ledit premier élément réseau (200, 200a) comportant un point de contrôle de service (302a, 302b, 302c) affecté à chaque interface de sortie (111a, 111b, 111c) dudit premier élément réseau (200, 200a) et vice versa, le paquet de données est traité par le point de contrôle de service (302b) affecté à l'interface de sortie (111b) sélectionnée par la fonction de routage basé sur une politique inter-réseau InPBR sélectionnée (301a), et dans lequel chaque point de contrôle de service (302a, 302b, 302c) inclut un mécanisme d'application d'admission et un point d'application de politique.

3. Procédé selon l'une des revendications 1 et 2, dans lequel, ledit premier élément réseau (200, 200a) comportant une fonction de traitement en sortie (303a, 303b, 303c) affectée à chaque interface de sortie (111a, 111b, 111c) dudit premier élément réseau, le paquet de données est traité par la fonction de traitement en sortie (303b) affectée à l'interface de sortie (111b) sélectionnée par la fonction de routage basé sur une politique inter-réseau InPBR sélectionnée (301a).

4. Procédé selon l'une des revendications 1 et 2, dans lequel, ledit premier élément réseau (200, 200a) comportant pour chaque interface de sortie (111a, 111b, 111c) autant de fonctions de traitement en sortie (303a, 303b, 303c ; 303d, 303e, 303f ; 303g, 303h, 303i) que de fonctions de routage basé sur une politique inter-réseau InPBR (301a, 301b, 301c), le paquet de données est traité par une fonction de traitement en sortie (303d) sélectionnée parmi les fonctions de traitement en sortie (303d, 303e, 303f) affectées à l'interface de sortie (111b) sélectionnée par la fonction de routage basé sur une politique inter-réseau InPBR sélectionnée (301a), la fonction de traitement en sortie (303d) sélectionnée étant la fonction de traitement en sortie associée à la fonction de routage basé sur une politique inter-réseau InPBR sélectionnée (301a).

5. Procédé selon l'une des revendications 3 et 4, dans lequel, ledit premier élément réseau (200, 200a) comportant une boucle de retour (350) depuis les fonctions de traitement en sortie (303a, 303b, 303c) vers les fonctions de routage basé sur une politique inter-réseau InPBR (301a, 301b, 301c), les fonctions de traitement en sortie (303a, 303b, 303c) fournissent aux fonctions de routage basé sur une politique inter-réseau InPBR (301a, 301b, 301c) des informations quant à des traitements appliqués par les fonctions de traitement en sortie (303a, 303b, 303c) sur ledit paquet de données.

6. Procédé selon la revendication 5, dans lequel la fonction de traitement en sortie (303b) affectée à l'interface de sortie (111b) sélectionnée par la fonction de routage basé sur une politique inter-réseau InPBR sélectionnée (301a) demande à ladite fonction de routage basé sur une politique inter-réseau InPBR sélectionnée (301a) de revoir sa décision de routage du paquet de données sur la base d'informations simultanément fournies par ladite fonction de traitement en sortie (303b) via la boucle de retour (350).

7. Procédé selon l'une quelconque des revendications 1 à 6, dans lequel, ledit premier élément réseau (200, 200a) comportant une fonction de traitement en sortie du processus de routage traditionnel (304a, 304b, 304c) affectée à chaque interface de sortie (111a, 111b, 111c) dudit premier élément réseau (200, 200a) et vice versa, le paquet de données est traité par la fonction de traitement en sortie du processus de routage traditionnel (304a) affectée à l'interface de sortie (111a) sélectionnée par le processus de routage traditionnel (101) avant la révision de la décision de routage par la fonction de routage basé sur une politique inter-réseau InPBR sélectionnée (301a).

8. Procédé selon la revendication 7, dans lequel, ledit premier élément réseau (200, 200a) comportant une boucle de contrôle depuis les fonctions de traitement en sortie du processus de routage traditionnel (304a, 304b, 304c) vers les fonctions de routage basé sur une politique inter-réseau InPBR (301a, 301b, 301b), les fonctions de traitement en sortie du processus de routage traditionnel (304a, 304b, 304c) fournissent aux fonctions de routage basé sur une politique inter-réseau InPBR (301a, 301b, 301c) des informations quant à des traitements appliqués par les fonctions de traitement en sortie du processus de routage traditionnel (304a, 304b, 304c).

9. Procédé selon l'une quelconque des revendications 1 à 8, dans lequel le processus de routage traditionnel (101) met en oeuvre le protocole à états de liens OSPF.

10. Procédé selon l'une quelconque des revendications 1 à 9, dans lequel les fonctions de routage basé sur une politique inter-réseau InPBR (301a, 301b, 301c) appliquent des règles de routage exprimées sous forme d'expressions régulières.

11. Produit programme d'ordinateur comportant des instructions causant l'implémentation par un élément réseau (200, 200a) du procédé selon l'une quelconque des revendications 1 à 10, lorsque les instructions sont exécutées par un processeur (401) de l'élément réseau (200, 200a).

12. Support de stockage d'informations sur lequel est stocké un produit programme d'ordinateur comportant des instructions causant l'implémentation par un élément réseau (200, 200a) du procédé selon l'une quelconque des revendications 1 à 10, lorsque les instructions sont lues et exécutées par un processeur (401) de l'élément réseau (200, 200a).

13. Elément réseau (200, 200a), dit premier élément réseau, d'un réseau de communication comportant en outre plusieurs seconds éléments réseau (200, 200b, 200c, 200c), les premier (200, 200a) et seconds (200, 200b, 200c) éléments réseau étant destinés à être interconnectés par des liens de communication inter-réseaux (210), le premier élément réseau (200, 200a) implémentant un processus de routage traditionnel (101) incluant une prise de décision de routage en fonction de la destination du paquet de données d'après un apprentissage de routes dans le réseau de communication, **caractérisé en ce que** le premier élément réseau (200, 200a) comporte en outre des moyens pour effectuer une révision de la décision de routage prise par le processus de routage traditionnel (101) par le biais d'une fonction de routage basé sur une politique inter-réseau InPBR (301a) sélectionnée parmi une pluralité de fonctions de routage basé sur une politique inter-réseau InPBR candidates (301a, 301b, 301c) dudit premier élément réseau (200, 200a), chaque fonction de routage basé sur une politique inter-réseau InPBR candidate (301a, 301b, 301b) étant affectée à une interface de sortie (111a, 111b, 111c) dudit premier élément réseau (200, 200a) et vice versa, la fonction de routage basé sur une politique inter-réseau InPBR sélectionnée (301a) étant la fonction de routage basé sur une politique inter-réseau InPBR candidate affectée à l'interface de sortie (111a) sélectionnée par le processus de routage traditionnel (101) pour router ledit paquet de données dans le réseau de communication.

14. Réseau de communication comportant des éléments réseau (200, 200a, 200b, 200c) interconnectés par des liens de communication inter-réseaux (210), chaque élément réseau (200, 200a, 200b, 200c) étant selon la revendication 13.

## Patentansprüche

1. Verfahren zum Routen eines Datenpakets durch ein erstes Netzelement (200, 200a) eines Kommunikationsnetzes, das ferner mehrere zweite Netzelemente (200, 200b, 200c, 200d) umfasst, wobei das erste (200, 200a) und die zweiten (200, 200b, 200c, 200d) Netzelemente durch Netzkommunikationsverbindungen (210) miteinander verbunden sind, wobei das Routing-Verfahren einen herkömmlichen Routing-Prozess (101) umfasst, der eine Routing-Entscheidungsfindung in Abhängigkeit von dem Zielort des Datenpakets gemäß erlernten Pfaden in dem Kommunikationsnetz umfasst, **dadurch gekennzeichnet, dass** das Routing-Verfahren ferner eine Überprüfung der durch den herkömmlichen Routing-Prozess getroffenen Routing-Entscheidung mittels einer Routing-Funktion auf Basis einer Netzrichtlinie InPBR (301a) umfasst, die aus einer Vielzahl von potentiellen Routing-Funktionen auf Basis einer Netzrichtlinie InPBR (301a, 301b, 301c) des ersten Netzelements (200, 200a) ausgewählt wird, wobei jede potentielle Routing-Funktion auf Basis einer Netzrichtlinie InPBR (301a, 301b, 301c) einer Ausgangsschnittstelle (111a, 111b, 111c) des ersten Netzelements (200, 200a) zugeordnet ist und umgekehrt, wobei die ausgewählte Routing-Funktion auf Basis einer Netzrichtlinie InPBR (301a) diejenige potentielle Routing-Funktion auf Basis einer Netzrichtlinie InPBR (301a, 301b, 301c) ist, die der Ausgangsschnittstelle (111a) zugeordnet ist, die durch den herkömmlichen Routing-Prozess (101) ausgewählt wurde, um das Datenpaket in dem Kommunikationsnetz zu routen.

2. Verfahren nach Anspruch 1, wobei, während das erste Netzelement (200, 200a) einen Dienstesteuerungspunkt (302a, 302b, 302c) umfasst, der jeder Ausgangsschnittstelle (111a, 111b, 111c) des ersten Netzelements (200, 200a) zugeordnet ist und umgekehrt, das Datenpaket durch denjenigen Dienstesteuerungspunkt (302b) verarbeitet wird, der der Ausgangsschnittstelle (111b) zugeordnet ist, die durch die ausgewählte Routing-Funktion auf Basis einer Netzrichtlinie InPBR (301a) ausgewählt wurde, und wobei jeder Dienstesteuerungspunkt (302a, 302b, 302c) einen Zulassungsanwendungsmechanismus und einen Richtlinienanwendungspunkt umfasst.

3. Verfahren nach einem der Ansprüche 1 und 2, wobei, während das erste Netzelement (200, 200a) eine Ausgangsverarbeitungsfunktion (303a, 303b, 303c) umfasst, die jeder Ausgangsschnittstelle (111a, 111b, 111c) des ersten Netzelements zugeordnet ist, das Datenpaket durch diejenige Ausgangsverarbeitungsfunktion (303b) verarbeitet wird, die der Ausgangsschnittstelle (111b) zugeordnet ist, die durch die ausgewählte Routing-Funktion auf Basis einer Netzrichtlinie InPBR (301a) ausgewählt wurde.

4. Verfahren nach einem der Ansprüche 1 und 2, wobei, während das erste Netzelement (200, 200a) für jede Ausgangsschnittstelle (111a, 111b, 111c) so viele Ausgangsverarbeitungsfunktionen (303a, 303b, 303c; 303d, 303e, 303f; 303g, 303h, 303i) umfasst, wie es Routing-Funktionen auf Basis einer Netzrichtlinie InPBR (301a, 301b, 301c) gibt, das Datenpaket durch eine Ausgangsverarbeitungsfunktion (303d) verarbeitet wird, die aus den Ausgangsverarbeitungsfunktionen (303d, 303e, 303f) ausgewählt ist, die der Ausgangsschnittstelle (111b) zugeordnet sind, die durch die ausgewählte Routing-Funktion auf Basis einer Netzrichtlinie InPBR (301a) ausgewählt wurde, wobei die ausgewählte Ausgangsverarbeitungsfunktion (303d) diejenige Ausgangsverarbeitungsfunktion ist, die mit der ausgewählten Routing-Funktion auf Basis einer Netzrichtlinie InPBR (301a) assoziiert ist.

5. Verfahren nach einem der Ansprüche 3 und 4, wobei, während das erste Netzelement (200, 200a) eine Rückkopplungsschleife (350) von den Ausgangsverarbeitungsfunktionen (303a, 303b, 303c) zu den Routing-Funktionen auf Basis einer Netzrichtlinie InPBR (301a, 301b, 301c) umfasst, die Ausgangsverarbeitungsfunktionen (303a, 303b, 303c) den Routing-Funktionen auf Basis einer Netzrichtlinie InPBR (301a, 301b, 301c) Informationen über Verarbeitungen übermitteln, die durch die Ausgangsverarbeitungsfunktionen (303a, 303b, 303c) auf das Datenpaket angewendet wurden.

6. Verfahren nach Anspruch 5, wobei die Ausgangsverarbeitungsfunktion (303b), die der Ausgangsschnittstelle (111b) zugeordnet ist, die durch die ausgewählte Routing-Funktion auf Basis einer Netzrichtlinie InPBR (301a) ausgewählt wurde, die ausgewählte Routing-Funktion auf Basis einer Netzrichtlinie InPBR (301a) auffordert, ihre Routing-Entscheidung für das Datenpaket auf der Basis von Informationen, die durch die Ausgangsverarbeitungsfunktion (303b) über die Rückkopplungsschleife (350) zeitgleich übermittelt werden, zu überprüfen.

7. Verfahren nach einem beliebigen der Ansprüche 1 bis 6, wobei, während das erste Netzelement (200, 200a) eine Ausgangsverarbeitungsfunktion des herkömmlichen Routing-Prozesses (304a, 304b, 304c) umfasst, die jeder Ausgangsschnittstelle (111a, 111b, 111c) des ersten Netzelements (200, 200a) zugeordnet ist und umgekehrt, das Datenpaket durch diejenige Ausgangsverarbeitungsfunktion des herkömmlichen Routing-Prozesses (304a) verarbeitet wird, die der durch den herkömmlichen Routing-Prozess (101) ausgewählten Ausgangsschnittstelle (111a) zugeordnet wurde, bevor die Routing-Entscheidung durch die ausgewählte Routing-Funktion auf Basis einer Netzrichtlinie InPBR (301a) überprüft wurde.

8. Verfahren nach Anspruch 7, wobei, während das erste Netzelement (200, 200a) eine Steuerschleife von den Ausgangsverarbeitungsfunktionen des herkömmlichen Routing-Prozesses (304a, 304b, 304c) zu den Routing-Funktionen auf Basis einer Netzrichtlinie InPBR (301a, 301b, 301c) umfasst, die Ausgangsverarbeitungsfunktionen des herkömmlichen Routing-Prozesses (304a, 304b, 304c) den Routing-Funktionen auf Basis einer Netzrichtlinie InPBR (301a, 301b, 301c) Informationen über Verarbeitungen übermitteln, die durch die Ausgangsverarbeitungsfunktionen des herkömmlichen Routing-Prozesses (304a, 304b, 304c) angewendet wurden.

9. Verfahren nach einem beliebigen der Ansprüche 1 bis 8, wobei der herkömmliche Routing-Prozess (101) das Verbindungszustandsprotokoll OSPF umsetzt.

10. Verfahren nach einem beliebigen der Ansprüche 1 bis 9, wobei die Routing-Funktionen auf Basis einer Netzrichtlinie InPBR (301a, 301b, 301c) Routing-Regeln anwenden, die in Form von Standardausdrücken ausgedrückt werden.

11. Computerprogrammprodukt, das Anweisungen umfasst, die die Implementierung, durch ein Netzelement (200, 200a), des Verfahrens nach einem beliebigen der Ansprüche 1 bis 10 bewirken, wenn die Anweisungen von einem Prozessor (401) des Netzelements (200, 200a) ausgeführt werden.

12. Informationsspeicherungsmedium, auf dem ein Computerprogrammprodukt gespeichert ist, das Anweisungen umfasst, die die Implementierung, durch ein Netzelement (200, 200a), des Verfahrens nach einem beliebigen der Ansprüche 1 bis 10 bewirken, wenn die Anweisungen von einem Prozessor (401) des Netzelements (200, 200a) gelesen und ausgeführt werden.

13. Netzelement (200, 200a), als erstes Netzelement bezeichnet, eines Kommunikationsnetzes, das ferner mehrere zweite Netzelemente (200, 200b, 200c, 200d) umfasst, wobei das erste (200, 200a) und die zweiten (200, 200b, 200c) Netzelemente dazu bestimmt sind, durch Netzkommunikationsverbindungen (210) miteinander verbunden zu sein, wobei das erste Netzelement (200, 200a) einen herkömmlichen Routing-Prozess (101) implementiert, der eine Routing-Entscheidungsfindung in Abhängigkeit von dem Zielort des Datenpakets gemäß erlernten Pfaden in dem Kommunikationsnetz umfasst, **dadurch gekennzeichnet, dass** das erste Netzelement (200, 200a) ferner Mittel zur Durchführung einer Überprüfung der durch den herkömmlichen Routing-Prozess (101) getroffenen Routing-Entscheidung mittels einer Routing-Funktion auf Basis einer Netzrichtlinie InPBR (301a) umfasst, die aus einer Vielzahl von potentiellen Routing-Funktionen auf Basis einer Netzrichtlinie InPBR (301a, 301b, 301c) des ersten Netzelements (200, 200a) ausgewählt wird, wobei jede potentielle Routing-Funktion auf Basis einer Netzrichtlinie InPBR (301a, 301b, 301b) einer Ausgangsschnittstelle (111a, 111b, 111c) des ersten Netzelements (200, 200a) zugeordnet ist und umgekehrt, wobei die ausgewählte Routing-Funktion auf Basis einer Netzrichtlinie InPBR (301a) diejenige potentielle Routing-Funktion auf Basis einer Netzrichtlinie InPBR ist, die der Ausgangsschnittstelle (111a) zugeordnet ist, die durch den herkömmlichen Routing-Prozess (101) ausgewählt wurde, um das Datenpaket in dem Kommunikationsnetz zu routen.

14. Kommunikationsnetz, das Netzelemente (200, 200a, 200b, 200c) umfasst, die durch Netzkommunikationsverbindungen (210) miteinander verbunden sind, wobei jedes Netzelement (200, 200a, 200b, 200c) Anspruch 13 entspricht.

## Claims

1. A method for routing a data packet through a first network element (200, 200a) of a communication network, further comprising a plurality of second network elements (200, 200b, 200c, 200d), the first (200, 200a) and second (200, 200b, 200c, 200d) network elements being interconnected by internetwork communication links (210), the routing method comprising a traditional routing process (101) including taking a routing decision as a function of the destination of the data packet according to route learning in the communication network, **characterized in that** the routing method further comprises a review of the routing decision taken by the traditional routing process by means of an internetwork policy-based routing function InPBR (301a) selected from among a plurality of candidate internetwork policy-based routing functions InPBR (301a, 301b, 301c) of said first network element (200, 200a), each candidate internetwork policy-based routing function InPBR (301a, 301b, 301c) being assigned to an egress interface (111a, 111b, 111c) of said first network element (200, 200a) and vice versa, the selected internetwork policy-based routing function InPBR (301a) being the candidate internetwork policy-based routing function InPBR (301a, 301b, 301c) assigned to the egress interface (111a) selected by the traditional routing process (101) for routing said data packet in the communication network.

2. The method as claimed in claim 1, wherein, with said first network element (200, 200a) comprising a service control point (302a, 302b, 302c) assigned to each egress interface (111a, 111b, 111c) of said first network element (200, 200a) and vice versa, the data packet is processed by the service control point (302b) assigned to the egress interface (111b) selected by the selected internetwork policy-based routing function InPBR (301a), and wherein each service control point (302a, 302b, 302c) includes an admission enforcement mechanism and a policy enforcement point.

3. The method as claimed in any of claims 1 and 2, wherein, with said first network element (200, 200a) comprising an egress processing function (303a, 303b, 303c) assigned to each egress interface (111a, 111b, 111c) of said first network element, the data packet is processed by the egress processing function (303b) assigned to the egress interface (111b) selected by the selected internetwork policy-based routing function InPBR (301a).

4. The method as claimed in any of claims 1 and 2, wherein, with said first network element (200, 200a) comprising, for each egress interface (111a, 111b, 111c), as many egress processing functions (303a, 303b, 303c; 303d, 303e, 303f; 303g, 303h, 303i) as there are internetwork policy-based routing functions InPBR (301a, 301b, 301c), the data packet is processed by an egress processing function (303d) selected from among the egress processing functions (303d, 303e, 303f) assigned to the egress interface (111b) selected by the selected internetwork policy-based routing function InPBR (301a), with the selected egress processing function (303d) being the egress processing function associated with the selected internetwork policy-based routing function InPBR (301a).

5. The method as claimed in any of claims 3 and 4, wherein, with said first network element (200, 200a) comprising a feedback loop (350) from the egress processing functions (303a, 303b, 303c) to the internetwork policy-based routing functions InPBR (301a, 301b, 301c), the egress processing functions (303a, 303b, 303c) supply the internetwork policy-based routing functions InPBR (301a, 301b, 301c) with information relating to the processing applied by the egress processing functions (303a, 303b, 303c) to said data packet.

6. The method as claimed in claim 5, wherein the egress processing function (303b) assigned to the egress interface (111b) selected by the selected internetwork policy-based routing function InPBR (301a) requests that said selected internetwork policy-based routing function InPBR (301a) reviews its decision for routing the data packet on the basis of information simultaneously supplied by said egress processing function (303b) via the feedback loop (350).

7. The method as claimed in any one of claims 1 to 6, wherein, with said first network element (200, 200a) comprising an egress processing function of the traditional routing process (304a, 304b, 304c) assigned to each egress interface (111a, 111b, 111c) of said first network element (200, 200a) and vice versa, the data packet is processed by the egress processing function of the traditional routing process (304a) assigned to the egress interface (111a) selected by the traditional routing process (101) before the review of the routing decision by the selected internetwork policy-based routing function InPBR (301a).

8. The method as claimed in claim 7, wherein, with said first network element (200, 200a) comprising a control loop from the egress processing functions of the traditional routing process (304a, 304b, 304c) to the internetwork policy-based routing functions InPBR (301a, 301b, 301c), the egress processing functions of the traditional routing process (304a, 304b, 304c) supply the internetwork policy-based routing functions InPBR (301a, 301b, 301c) with information relating to the processing applied by the egress processing functions of the traditional routing process (304a, 304b, 304c).

9. The method as claimed in any one of claims 1 to 8, wherein the traditional routing process (101) implements the OSPF link-state protocol.

10. The method as claimed in any one of claims 1 to 9, wherein the internetwork policy-based routing functions InPBR (301a, 301b, 301c) apply routing rules expressed in the form of regular expressions.

11. A computer program product comprising instructions causing the implementation, by a network element (200, 200a), of the method as claimed in any one of claims 1 to 10, when the instructions are executed by a processor (401) of the network element (200, 200a).

12. An information storage medium, which stores a computer program product comprising instructions causing the implementation, by a network element (200, 200a), of the method as claimed in any one of claims 1 to 10, when the instructions are read and executed by a processor (401) of the network element (200, 200a).

13. A network element (200, 200a), called first network element, of a communication network, further comprising a plurality of second network elements (200, 200a, 200b, 200c), the first (200, 200a) and second (200, 200b, 200c) network elements being intended to be interconnected by internetwork communication links (210), the first network element (200, 200a) implementing a traditional routing process (101) including taking a routing decision as a function of the destination of the data packet according to route learning in the communication network, **characterized in that** the first network element (200, 200a) further comprises means for reviewing the routing decision taken by the traditional routing process (101) by means of an internetwork policy-based routing function InPBR (301a) selected from among a plurality of candidate internetwork policy-based routing functions InPBR (301a, 301b, 301c) of said first network element (200, 200a), each candidate internetwork policy-based routing function InPBR (301a, 301b, 301c) being assigned to an egress interface (111a, 111b, 111c) of said first network element (200, 200a) and vice versa, the selected internetwork policy-based routing function InPBR (301a) being the candidate internetwork policy-based routing function InPBR assigned to the egress interface (111a) selected by the traditional routing process (101) for routing said data packet in the communication network.

14. A communication network comprising network elements (200, 200a, 200b, 200c) interconnected by internetwork communication links (210), each network element (200, 200a, 200b, 200c) being a network element according to claim 13.
